# EUROPEAN PATENT SPECIFICATION

(11) **EP 3 702 193 B1**
(45) Date of publication and mention of the grant of the patent: **10.11.2021**
(21) Application number: 20150897.5
(22) Date of filing: 09.01.2020
(51) Int. Cl.: B60K 35/00, B60K 37/00, B60K 37/02, B60K 37/04, B60R 11/00, B60R 11/02, B60Q 3/00, B60Q 3/78, B60Q 3/10, B60Q 1/26, B60Q 1/48, B60Q 1/50, B60R 7/06

(54) **DASHBOARD-AND-INSTRUMENT PANEL UNIT FOR A MOTOR-VEHICLE**
ARMATURENBRETT- UND INSTRUMENTENTAFELEINHEIT FÜR EIN KRAFTFAHRZEUG
UNITÉ DE TABLEAU DE BORD ET DE PANNEAU D'INSTRUMENT POUR UN VÉHICULE À MOTEUR

(30) Priority: 01.03.2019 IT 201900003005
(43) Date of publication of application: 02.09.2020
(73) Proprietor: FCA Italy S.p.A., 10135 Torino (IT)
(72) Inventor: WUPPINGER, Mr. Andreas, I-10135 Torino (IT); LONGO, Mr. Michele, I-10135 Torino (IT); DILILLO, Mr. Alberto, I-10135 Torino (IT)
(74) Representative: Notaro, Giancarlo

(56) References cited:
- DE-A1- 10 218 505
- DE-A1-102009 033 186
- DE-A1-102015 200 233
- DE-A1-102017 200 711
- DE-A1-102017 202 241
- FR-A1- 3 047 701
- US-A- 4 724 918
- US-A- 6 002 921

## Description

The present invention relates to a dashboard-and-instrument panel unit for a motor-vehicle of the type indicated in the preamble of claim 1.

The invention relates in particular to a dashboard-and-instrument panel unit of an electric vehicle of the "city car" category. However, the invention is applicable in general to any type of vehicle of any category and with any type of propulsion.

A dashboard-and-instrument panel unit having the above characteristics is known from document DE 10 2009 033186 A1. Documents DE 10 2017 202241 A1, DE 10 2015 200233 A1, DE 102 18 505 A1 and DE 10 2017 200711 A1 show further examples of dashboard solutions with unconventional instrument panels.

The main object of the invention is that of providing a dashboard-and-instrument panel unit which offers a number of new and original functionalities which are of help to the user and which preferably also increase the degree of safety on board the vehicle.

A further object of the invention is that of achieving the above indicated purpose through a solution which is of relatively simple and inexpensive construction.

In view of achieving these and further objects, the invention provides a dashboard-and-instrument panel unit having the characteristics indicated **in claim 1.**

According to a further preferred feature of the invention, around its front surface the body of the instrument panel has a light source in the form of an endless peripheral edge, having an upper horizontal portion, a lower horizontal portion, and two end portions which connect the upper portion and the lower portion with each other.

In one embodiment, said light source is configured for:
- enlighting the entire endless edge with red light, for signaling the activation of the vehicle brakes,
- intermittently enlighting one or both the end portions of the endless edge with yellow light, for signaling the activation of one or both the vehicle left and right direction lights, and
- intermittently enlighting one of the end portions of the endless edge with red light as a result of a signal being emitted by a sensor adapted to signaling proximity of another vehicle in an area not covered by the rearview mirrors of the vehicle.

Preferably, a front surface of the body of the instrument panel and/or of the supporting arm, which faces in the travelling direction of the vehicle, and is visible from outside through the vehicle windshield, has at least one area provided with an indicia configured to be enlightened, for example for signaling a busy or free status of a vehicle used as a taxi or for public transportation.

Further features and advantages of the invention will become apparent from the description which follows with reference to the annexed drawings, given purely by way of non-limiting example, in which:
- figure 1 is a front view of a dashboard-and-instrument panel unit according to the invention,
- figure 2 is a perspective view which shows the connection of the instrument panel to the structure of the dashboard,
- figures 3-5 are front views of the instrument panel which show the instrument panel in three different operative conditions,
- figure 6 shows a further front view of the instrument panel which relates to an embodiment in which the instrument panel is provided with a light source in the form of an endless peripheral edge, and
- figure 7 is a partial front view of a vehicle provided with the instrument panel according to the invention, in a specific application in which the vehicle is to be used as a taxi or a vehicle for public transportation.

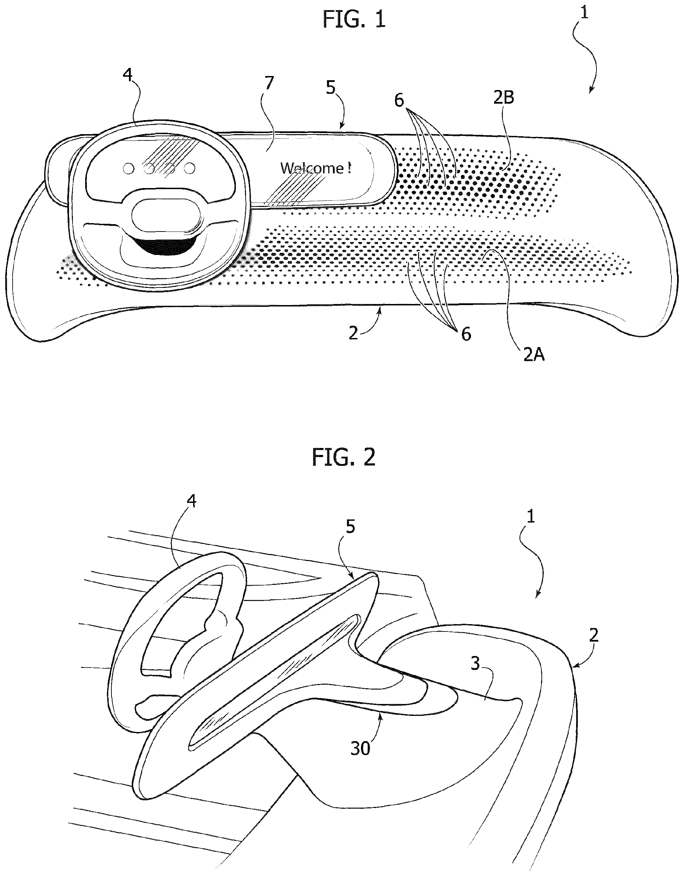

With reference to figure 1, numeral 1 generally designates a vehicle dashboard, in particular to be used on a vehicle of the "city car" type, with electric propulsion. As indicated in the foregoing, this example is given herein purely in a non-limiting way, while it is understood that the invention is of general application and can be used on vehicles of any type, with electric propulsion or with internal combustion engine.

In the case of the embodiment disclosed herein, the dashboard has a structure comprising wall 2, defining a horizontal planar support surface 2A, and a surface 2B which progressively rises upwardly starting from the front side and the two lateral sides of the supporting surface 2A, along a curved profile, having its concavity facing towards the vehicle passenger compartment. The wall 2 has a predetermined distribution of holes 6 in which pins can be engaged which are carried by a plurality of accessories associated with the dashboard 1. In this manner, the various accessories can be placed on the dashboard in different positions, which can be selected by the end user, according to its specific needs.

With reference to figure 2, numeral 3 designates a supporting arm which projects upwardly starting from the wall 2 of the dashboard 1 and is provided for surrounding the steering shaft (not shown in the drawings) to which the steering wheel 4 (figure 1) is connected. From supporting arm 3, there projects an arm auxiliary portion 30 which supports an instrument panel 5 of the vehicle in an elevated position, spaced apart from the dashboard structure. Therefore the instrument panel has the appearance of an autonomous unit with respect to the dashboard 1, i.e. a unit whose body is separate and spaced apart with respect to the body of the dashboard.

Figure 1 shows an embodiment in which the instrument panel 5 includes a display 7.

According to a feature of the present invention, the instrument panel 5 comprises a body 8 extended in the horizontal direction, with a main portion 9 and an end portion 10 (which in the illustrated example is the end facing towards the central part of the passenger compartment of the vehicle) which is horizontally slidably mounted with respect to the main portion 9.

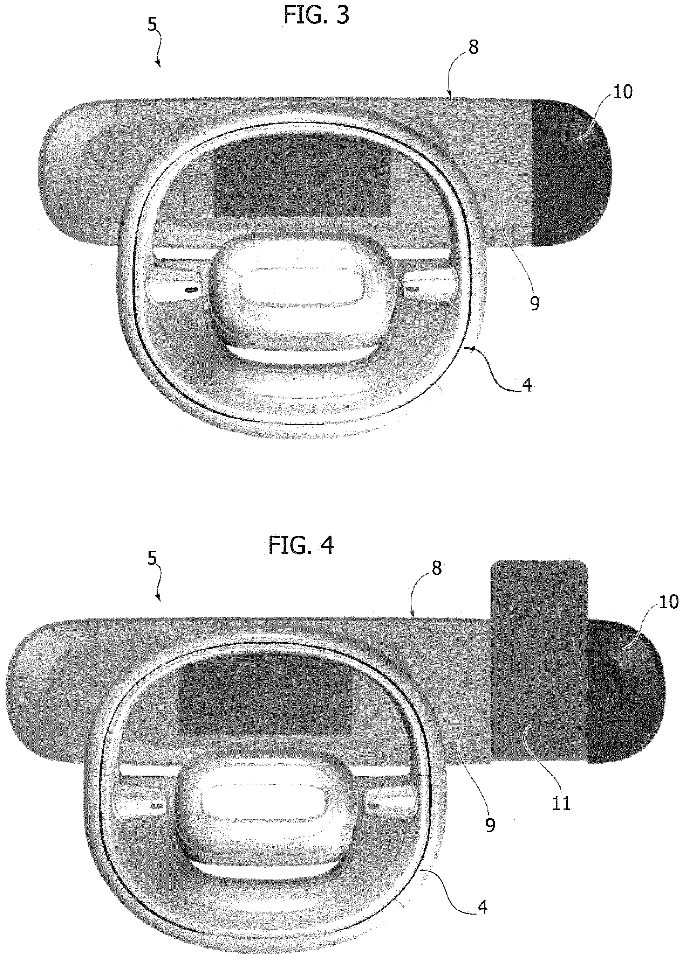

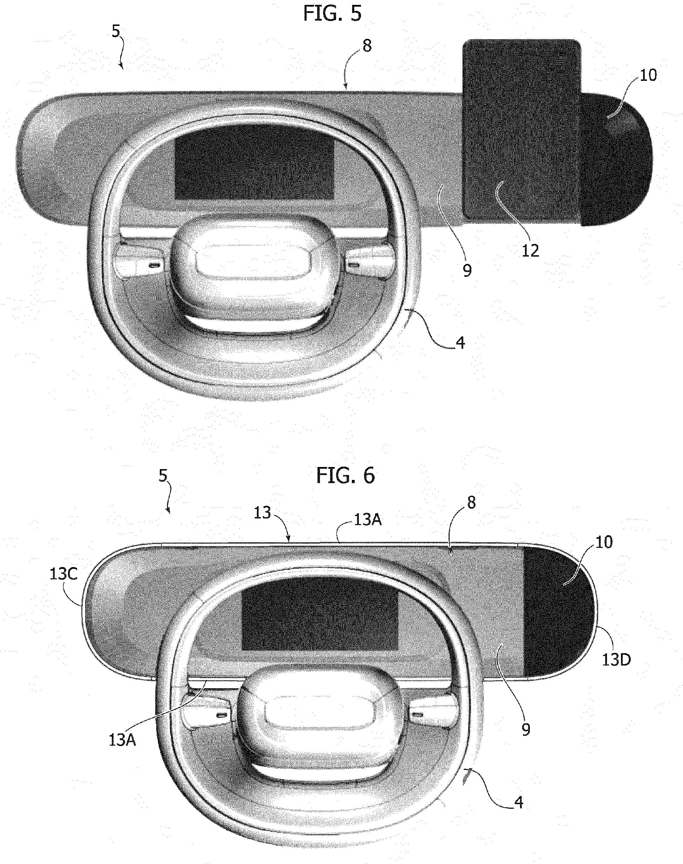

Figure 3 shows the end portion 10 in an inoperative position, adjacent to the main portion 9 of the body 8. Figures 4, 5 show the end portion 10 in two different operative positions which are for supporting and locking an electronic device, such as a smartphone 11 (figure 4) or a tablet 12 (figure 5), into a space defined between the main portion 9 and the end portion 10 of the body 8.

The details of construction of the system for locking the electronic device 11 or 12 in its seat defined between the portions 9,10 of the instrument panel are not described nor illustrated herein, since they can be made in any known way. For example, the portions 9,10 of the instrument panel may be configured with facing edges profiled so as to define a seat in which the electronic device 11, 12 is supported and held. It can be also provided for the end portion 10 to be biased by a spring towards the inoperative position shown in figure 3, adjacent to the main portion 9. It is also possible to provide an anti-theft device for preventing unauthorized removal of the electronic device, which includes a device for locking the electronic device 11 or 12 in its seat, said locking device being releasable by means of a remote control, associated to the vehicle key.

Figure 6 shows an embodiment in which the body 8 of the unit constituting the instrument panel has around its front surface a light source (for example a LED source) in the form of a peripheral endless edge 13, with an upper horizontal portion 13A, a lower horizontal portion 13B, a left end portion 13C, and a right end portion 13D. The light source is controlled by an electronic control unit which preferably is configured for:
- enlightening the entire endless edge 13 with a red light for signaling the activation of the vehicle brakes,
- intermittently enlightening one or both the left and right end portions 13C, 13D of the endless edge 13 with a yellow light for signaling the activation of one or both the vehicle left and right direction lights,
- intermittently enlightening one of the end portions 13C, 13D of the endless edge 13 with a red light, as a result of a signal being emitted by a sensor provided on board the vehicle for signaling the proximity of another vehicle in an area which is not covered by the rear view mirrors.

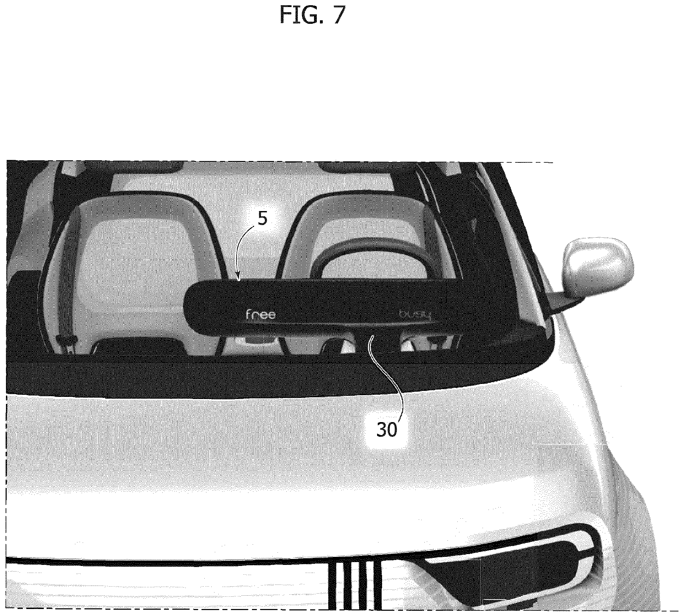

Figure 7 refers to a specific application in which the vehicle is to be used as a taxi or a vehicle for public transportation. The front surface of the body 8, facing in the travel direction of the vehicle, and/or the surface of the support arm portion 30 which is visible from outside through the vehicle windshield, has at least one area provided with an indicia which is configured to be enlightened, for example for signaling the busy or free status of the vehicle.

Naturally, while the principle of the invention remains the same, the details of construction and the embodiments may widely vary with respect to what has been described purely by way of example, without departing from the scope of the present invention, as defined in the annexed claims.

## Claims

1. Dashboard-and-instrument panel unit for a motor-vehicle, comprising a dashboard (1) including a dashboard structure (2) and an instrument panel (5) supported above the dashboard structure (2) and configured to receive an accessory member (11; 12), such as a cellular phone or a smartphone or a tablet,
wherein said instrument panel (5) is configured as an autonomous unit, supported in an elevated position spaced apart from the structure (2) of the dashboard (1) by means of a supporting arm (3, 30) which projects upwardly from the dashboard structure (2), and
wherein said instrument panel (5) includes a horizontally elongated body (8), having a main portion (9) and one end portion (10) horizontally slidable with respect to the main portion (9), between a first position adjacent to the main portion (9) and a second position longitudinally spaced from the main portion (9), in which second position, between the main portion (9) and the end portion (10), a space is defined which is configured to accommodate and provide a seat for said accessory member,
said dashboard-and-instrument panel unit being **characterized in that** said slidable end portion (10) of the body (8) of the instrument panel (5) is biased by a spring towards said first position adjacent to said main portion (9), and **in that** it comprises an anti-theft device for preventing a removal of said accessory member (11; 12), including a device for locking the accessory member (11; 12) in its seat, said locking device being releasable by means of a remote control associated to a vehicle key.

2. Dashboard-and-instrument panel unit according to claim 1, **characterized in that** around its front surface the body (8) of said instrument panel (5) has a light source (13) in the form of an endless peripheral edge, having an upper horizontal portion (13A), a lower horizontal portion (13B), and two end portions (13C, 13D) which connect the upper portion (13A) and the lower portion (13B) with each other.

3. Dashboard-and-instrument panel unit according to claim 2, **characterized in that** said light source (13) is configured for:
- enlighting the entire endless edge (13) with red light, for signaling the activation of the vehicle brakes,
- intermittently enlighting one or both the end portions (13C, 13D) of the endless edge (13) with yellow light, for signaling the activation of one or both the vehicle left and right direction lights, and
- intermittently enlighting one of the end portions (13C, 13D) of the endless edge (13) with red light as a result of a signal being emitted by a sensor adapted to signaling proximity of another vehicle in an area not covered by the rearview mirrors of the vehicle.

4. Dashboard-and-instrument panel unit according to claim 1, **characterized in that** a front surface of the body (8) of the instrument panel and/or of the supporting arm (3, 30), which faces in the travelling direction of the vehicle, and is visible from outside through the vehicle windshield, has at least one area provided with an indicia configured to be enlightened, for example for signaling a busy or free status of a vehicle used as a taxi or for public transportation.

## Patentansprüche

1. Armaturenbrett- und Instrumententafeleinheit für ein Kraftfahrzeug, umfassend ein Armaturenbrett (1) mit einer Armaturenbrettstruktur (2) und einer Instrumententafel (5), die oberhalb der Armaturenbrettstruktur (2) gelagert und dazu ausgelegt ist, ein Zubehörelement (11; 12), wie beispielsweise ein Mobiltelefon oder ein Smartphone oder ein Tablett, aufzunehmen,
wobei die Instrumententafel (5) als eine autonome Einheit konfiguriert ist, die in einer erhöhten Position mit Abstand zu der Struktur (2) des Armaturenbretts (1) mithilfe eines Tragarms (3, 30) gelagert ist, der von der Armaturenbrettstruktur (2) nach oben vorsteht, und
wobei die Instrumententafel (5) einen horizontal langgestreckten Körper (8) mit einem Hauptabschnitt (9) und einem Endabschnitt (10) aufweist, der horizontal bezüglich des Hauptabschnitts (9) zwischen einer ersten Position neben dem Hauptabschnitt (9) und einer zweiten Position, die in Längsrichtung von dem Hauptabschnitt (9) beabstandet ist, verschiebbar ist, wobei in der zweiten Position zwischen dem Hauptabschnitt (9) und dem Endabschnitt (10) ein Raum definiert ist, der dazu ausgelegt ist, das Zubehörelement aufzunehmen und einen Sitz dafür zu bieten,
wobei die Armaturenbrett- und Instrumententafeleinheit **dadurch gekennzeichnet ist, dass** der verschiebbare Endabschnitt (10) des Körpers (8) der Instrumententafel (5) durch eine Feder in Richtung der ersten Position neben dem Hauptabschnitt (9) vorgespannt ist, und **dadurch,** dass er eine Diebstahlsicherung zum Verhindern einer Entnahme des Zubehörelements (11; 12) umfasst, einschließlich einer Vorrichtung zum Verriegeln des Zubehörelements (11; 12) in seinem Sitz, wobei die Verriegelungsvorrichtung mittels einer Fernsteuerung lösbar ist, die einem Fahrzeugschlüssel zugehörig ist.

2. Armaturenbrett- und Instrumententafeleinheit nach Anspruch 1, **dadurch gekennzeichnet, dass** der Körper (8) der Instrumententafel (5) um seine vordere Oberfläche herum eine Lichtquelle (13) in Form einer endlosen Umfangskante aufweist, die einen oberen horizontalen Abschnitt (13A), einen unteren horizontalen Abschnitt (13B) und zwei Endabschnitte (13C, 13D) hat, welche den oberen Abschnitt (13A) und den unteren Abschnitt (13B) miteinander verbinden.

3. Armaturenbrett- und Instrumententafeleinheit nach Anspruch 2, **dadurch gekennzeichnet, dass** die Lichtquelle (13) zu Folgendem ausgelegt ist:
- Beleuchten der gesamten endlosen Kante (13) mit rotem Licht, um die Aktivierung der Fahrzeugbremsen zu signalisieren,
- intermittierendes Beleuchten von einem oder beiden Endabschnitten (13C, 13D) der endlosen Kante (13) mit gelbem Licht, um die Aktivierung von einem oder beiden aus dem rechten und linken Blinker des Fahrzeugs zu signalisieren, und
- intermittierendes Beleuchten von einem der Endabschnitte (13C, 13D) der endlosen Kante mit rotem Licht als Ergebnis eines Signals, das von einem Sensor ausgesendet wird, der dazu eingerichtet ist, die Nähe eines anderen Fahrzeugs in einem Bereich zu signalisieren, der nicht von den Rückspiegel des Fahrzeugs abgedeckt wird.

4. Armaturenbrett- und Instrumententafeleinheit nach Anspruch 1, **dadurch gekennzeichnet, dass** eine vordere Oberfläche des Körpers (8) der Instrumententafel und/oder des Tragarms (3, 30), die in der Fahrtrichtung des Fahrzeugs ausgerichtet und von außen durch die Windschutzscheibe sichtbar ist, mindestens einen Bereich aufweist, der mit einer Kennzeichnung versehen ist, die dazu ausgelegt ist, beleuchtet zu werden, z. B. um einen belegten oder freien Status eines Fahrzeugs zu signalisieren, das als Taxi oder für den öffentlichen Verkehr verwendet wird.

## Revendications

1. Unité de planche de bord et de tableau de bord pour un véhicule automobile, comprenant une planche de bord (1) comportant une structure de planche de bord (2) et un tableau de bord (5) supporté au-dessus de la structure de planche de bord (2) et configuré pour recevoir un élément accessoire (11 ; 12), comme un téléphone portable ou un smartphone ou une tablette,
dans laquelle ledit tableau de bord (5) est configuré comme une unité autonome, supportée dans une position élevée espacée de la structure (2) de la planche de bord (1) au moyen d'un bras de support (3, 30) qui fait saillie vers le haut depuis la structure de planche de bord (2), et
dans laquelle ledit tableau de bord (5) comporte un corps allongé horizontalement (8), ayant une partie principale (9) et une partie d'extrémité (10) coulissant horizontalement par rapport à la partie principale (9), entre une première position adjacente à la partie principale (9) et une deuxième position espacée longitudinalement de la partie principale (9), dans laquelle deuxième position, entre la partie principale (9) et la partie d'extrémité (10), un espace est défini qui est configuré pour recevoir et fournir un siège pour ledit élément accessoire,
ladite unité de planche de bord et de tableau de bord étant **caractérisée en ce que** ladite partie d'extrémité coulissante (10) du corps (8) du tableau de bord (5) est rappelée par un ressort vers ladite première position adjacente à ladite partie principale (9), et **en ce qu'**elle comprend un dispositif antivol pour empêcher un retrait dudit élément accessoire (11 ; 12), comportant un dispositif de verrouillage de l'élément accessoire (11 ; 12) dans son siège, ledit dispositif de verrouillage pouvant être libéré au moyen d'une télécommande associée à une clé de véhicule.

2. Unité de planche de bord et de tableau de bord selon la revendication 1, **caractérisée en ce qu'**autour de sa surface avant le corps (8) dudit tableau de bord (5) a une source de lumière (13) en forme de bord périphérique sans fin, ayant une partie horizontale supérieure (13A), une partie horizontale inférieure (13B) et deux parties d'extrémité (13C, 13D) qui relient la partie supérieure (13A) et la partie inférieure (13B) l'une à l'autre.

3. Unité de planche de bord et de tableau de bord selon la revendication 2, **caractérisée en ce que** ladite source de lumière (13) est configurée pour :
- éclairer tout le bord sans fin (13) avec une lumière rouge, pour signaler l'activation des freins du véhicule,
- éclairer par intermittence l'une ou les deux parties d'extrémité (13C, 13D) du bord sans fin (13) avec une lumière jaune, pour signaler l'activation de l'un ou des deux feux de direction gauche et droit du véhicule, et
- éclairer par intermittence l'une des parties d'extrémité (13C, 13D) du bord sans fin (13) avec une lumière rouge à la suite d'une émission d'un signal par un capteur apte à signaler la proximité d'un autre véhicule dans une zone non couverte par les rétroviseurs du véhicule.

4. Unité de planche de bord et de tableau de bord selon la revendication 1, **caractérisée en ce qu'**une surface avant du corps (8) du tableau de bord et/ou du bras de support (3, 30), qui fait face à la direction de déplacement du véhicule, et est visible de l'extérieur à travers le pare-brise du véhicule, a au moins une zone munie d'un indice configuré pour être éclairé, par exemple pour signaler un état occupé ou libre d'un véhicule utilisé comme un taxi ou pour les transports en commun.
